Europäisches Patentamt

European Patent Office

Office européen des brevets

(19)

(11)    EP 1 501 150 A1

## (12)    EUROPEAN PATENT APPLICATION
published in accordance with Art. 158(3) EPC

(43) Date of publication:
   26.01.2005  Bulletin 2005/04

(21) Application number: 02722805.5

(22) Date of filing: 26.04.2002

(51) Int Cl.⁷: $H01M\ 10/04$, $H01M\ 10/30$

(86) International application number:
   PCT/JP2002/004191

(87) International publication number:
   WO 2003/092113 (06.11.2003 Gazette 2003/45)

(84) Designated Contracting States:
   AT BE CH CY DE DK ES FI FR GB GR IE IT LI LU
   MC NL PT SE TR

(71) Applicant: Kawasaki Jukogyo Kabushiki Kaisha
   Kobe-shi, Hyogo 650-8670 (JP)

(72) Inventors:
   • Tsutsumi, Kazuo
    Kobe-shi, Hyogo 651-2215 (JP)

   • Kumagai, Chikanori
    Kobe-shi, Hyogo 655-0853 (JP)
   • Tsutsumi, Atsushi
    Tokyo 178-0065 (JP)
   • Kubo, Yukio
    Itami-shi, Hyogo 664-0005 (JP)

(74) Representative: HOFFMANN - EITLE
   Patent- und Rechtsanwälte
   Arabellastrasse 4
   81925 München (DE)

### (54)    BATTERY

(57)    Anode active material particles and an electrolytic solution 16 are filled in an anode cell 12 as one of two vessels connected to each other with an ion-permeable separator 10 interposed therebetween, and cathode active material particles and an electrolytic solution 18 are filled in a cathode cell 14 as the other vessel. Electrically conductive current collectors 20 and 22 are provided in contact with the active material particles within the two vessels. The active material particles form fixed layers.

FIG. 1

# Description

## [Technical Field]

The present invention relates to a battery of a fixed-layer type, which is formed by active material particles with a simple structure and is capable of storing a huge electric power. The present invention relates to a three-dimensional battery with a simple structure which is formed by a fixed layer by putting active material particles adapted to discharge and adsorb electrons in an electrolytic solution filled in a cell (vessel) as minimum electrodes, and is capable of storing an electric power of a large capacity.

## [Background Art]

Conventionally, a battery is structured in a way that an active material having the shape of plate or sheet is immersed in an electrolytic solution. And, a plate-shaped separator is disposed between a cathode and an anode, thereby forming an electrode structure.

For example, Japanese Laid-Open Patent Provisional Publication No. Hei. 7 - 169513 discloses a method and device that reproduce a battery material after discharge thermally or chemically to continuously generate an electric power by using combustion heat of a fossil fuel. Also, Japanese Patent Publication No. 3051401 discloses a three-dimensional battery of a fluidized layer type. In the battery disclosed in this publication, a high power can be gained but equipment becomes intricate.

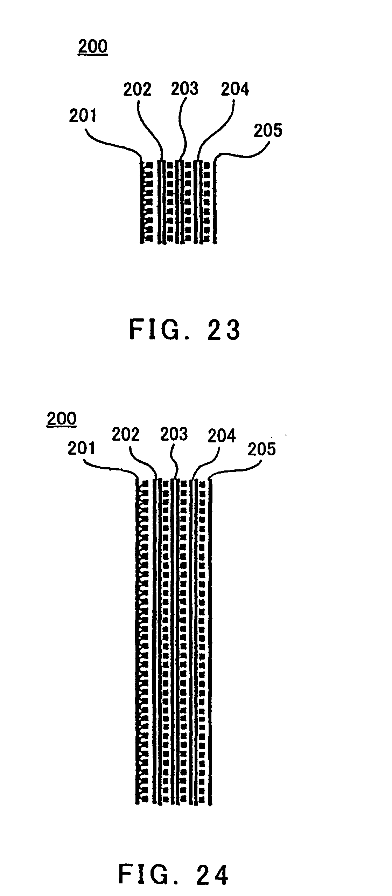

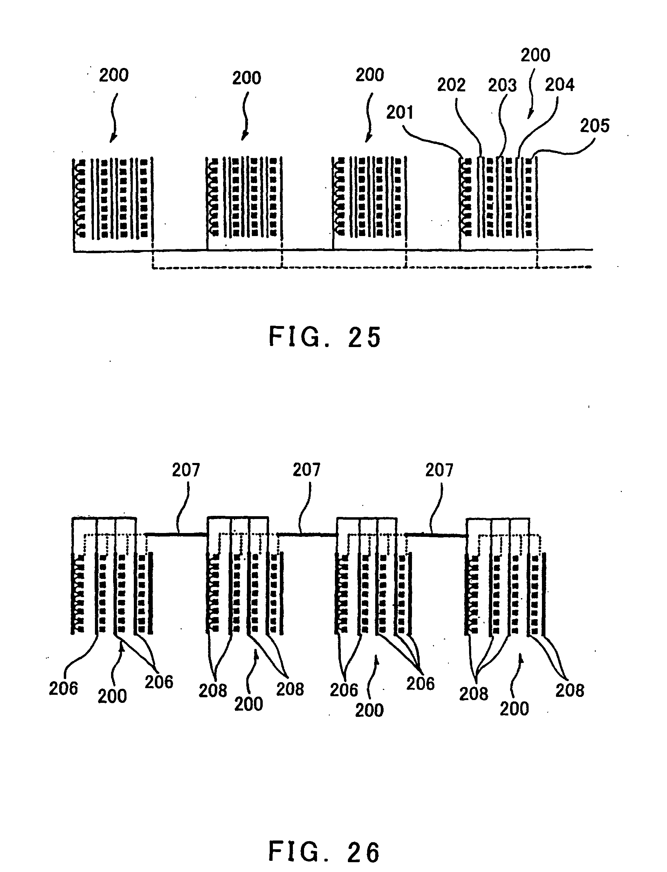

Conventionally, as shown in Fig. 23, a nickel-hydrogen battery is formed by making a current collector 201, a cathode 202, a separator 203, an anode 204, and a current collector 205 in close contact with one another. This example is described in Japanese Laid-Open Patent Provisional Publication No. Hei. 9 - 298067. A battery disclosed in this Publication is structured such that a plurality of element batteries (unit batteries) each comprising a cathode mainly composed of nickel hydroxide, an anode mainly composed of hydrogen-occluding alloy, a separator formed of a polymer non-woven fabric, and an electrolytic solution composed of an alkali aqueous solution, are connected in series and stored in a metallic square vessel and an opening thereof is sealed by a sealing plate having a reversible vent. The conventional battery 200 has a membrane structure (two-dimensional structure), including the above-described structure. To obtain the battery 200 of a large capacity, it is extended to make it thinner as shown in Fig. 24 and wound, or the unit batteries 200 are connected in parallel as shown in Fig. 25. Or otherwise, as shown in Fig. 26, typically, a plurality of electrode plates 206 are interposed within a number of unit batteries 200 and wirings 207 connected to the respective electrode plates 206 are pulled out of the batteries to allow these electrodes to be connected to electrode plates 208 of another unit batteries that have different polarity, thereby obtaining a layered structure. In a three-dimensional battery of a fluidized layer type disclosed in Japanese Patent Publication No. 3051401, high power can be gained but equipment thereof becomes intricate.

However, the above conventional batteries have drawbacks as described below.

(1) Enlargement of scale is limited or impossible.

The conventional battery has a membrane structure (two-dimensional structure), and the current flowing in the battery is directly proportional to the area of the membrane. Therefore, for example, if 1W power is generated in 1 $m^2$ area, then (100 $\times$ 100)$m^2$ area is required to generate 10 kW power. Accordingly, membranes may be increased in number or may be enlarged and wound. In either case, the battery becomes huge and is difficult for practical use. Consequently, the batteries must be connected in parallel, and thereby, the whole structure becomes intricate.

Further, in the case of a battery which has a membrane area of 1 $m^2$, an area of one billion $m^2$ is required to obtain one million kW power. This corresponds to a square having four sides which are approximately 32 kilometer long respectively, and cannot be practically formed into a flange. Even if the number of membranes is increased as a solution to this, the enlargement of scale is impossible.

(2) Degradation of active materials or catalysts cannot be dealt with.

In the conventional battery, since the active materials and the catalysts are used as components of the battery and fixed in plate or cylindrical shape, they must be replaced if degraded. In actuality, such replacement is impossible and the degraded battery is discarded. So, it is necessary to replace the whole battery.

(3) A heat transfer surface for exothermic reaction and endothermic reaction in association with charge and discharge cannot be installed.

In view of a battery characteristic in which exothermic reaction or endothermic reaction is conducted in association with charge and discharge of the battery, self-discharge increases with increasing temperature, whereas a reaction speed decreases with decreasing temperature, it is necessary to install a heat transfer surface within the battery. But, since the conventional battery has an intricate structure, the heat transfer surface can not installed. Besides, since the battery is small and a battery surface area with respect to its output is small, it is naturally cooled or heat-absorbed. And, the upper limit temperature is set by using a temperature fuse but any temperature control device is not installed within the battery.

(4) An energy density is low.

In the conventional battery, a current is directly proportional to an area of the membrane. For example, in the case of the battery having a membrane area of 1 m$^2$ and a power of 1W, one million membrane batteries each having a membrane area of 1 m$^2$ and a width of 0.1 m are required and therefore have a volume of 100000 m$^3$ in order to create a battery of 1000 kW . Consequently, the energy density cannot be increased.

(5) A production cost of a battery having a large capacity is extremely high.

In case of the battery of the membrane structure, if it is made to obtain the large capacity, the area of the membrane must be correspondingly increased, and the production cost becomes higher with an increase in the battery capacity. For this reason, enlargement of the scale results in no advantage in production cost.

(6) When the batteries are connected in series, a device cost is high and a resistance energy loss in a connected portion is large. For example, when a plurality of batteries each capable of generating 1.6V to 2.0V voltage are connected to obtain a voltage as high as 10V, they must be connected by means of electric wires. The manufacturing cost therefore becomes high and heat loss generated due to the current passing through the connected portion causes an energy loss.

The present invention has been developed in view of the above, and an object of the present invention is to provide a battery of a fixed-layer type constructed such that active material particles are filled in a vessel, for simplifying equipment, enabling an enlargement of scale, recovering and replacing degraded active material and catalysts, installing heat transfer surfaces within the battery, and increasing an energy density.

Another object of the present invention is to provide a layered battery having a three-dimensional structure comprised of particles in the shape of fixed layers, thereby increasing a battery capacity by increasing a volume (cells) of the battery, and providing various advantages associated with scale up.

[Disclosure of the Invention]

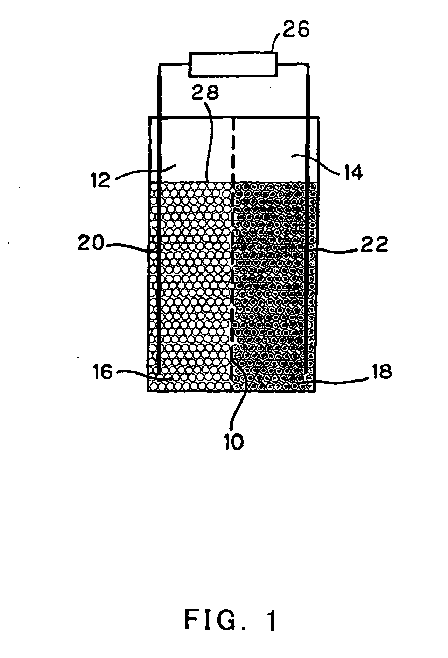

In order to achieve the above-described object, a battery of the present invention comprises two vessels (cells) connected to each other with a member interposed therebetween and filled with electrolytic solutions, the member being configured to permit passage of an ion, active material particles filled in the electrolytic solution to form a fixed layer within one of the vessels and adapted to discharge electrons, and active material particles filled in the electrolytic solution to form a fixed layer within the other vessel and adapted to absorb the electrons, wherein electrically conductive current collectors are provided in contact with the active material particles within the two vessels (see Figs. 1 to 12).

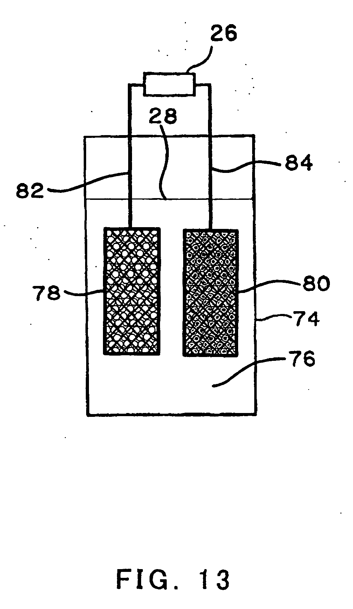

A battery of the present invention comprises vessels (cells) filled with electrolytic solutions, a porous body that contains active material particles formed as a fixed layer in the electrolytic solution and adapted to discharge electrons, a porous body that contains active material particles formed as a fixed layer in the electrolytic solution and adapted to absorb the electrons, and electrically conductive current collectors connected to the porous bodies in contact with the active material particles (see Fig. 13)

As used herein, the active material particles and the fixed layer have the following means.

In general, when a solid material is finely divided into particulates, the particulates have a high ratio of a surface area to cubic volume and hence have surface characteristic (property) which can not be negligible. The particulates are called fine particulates. As used herein, aggregation of the solid fine particulates are referred to as particles.

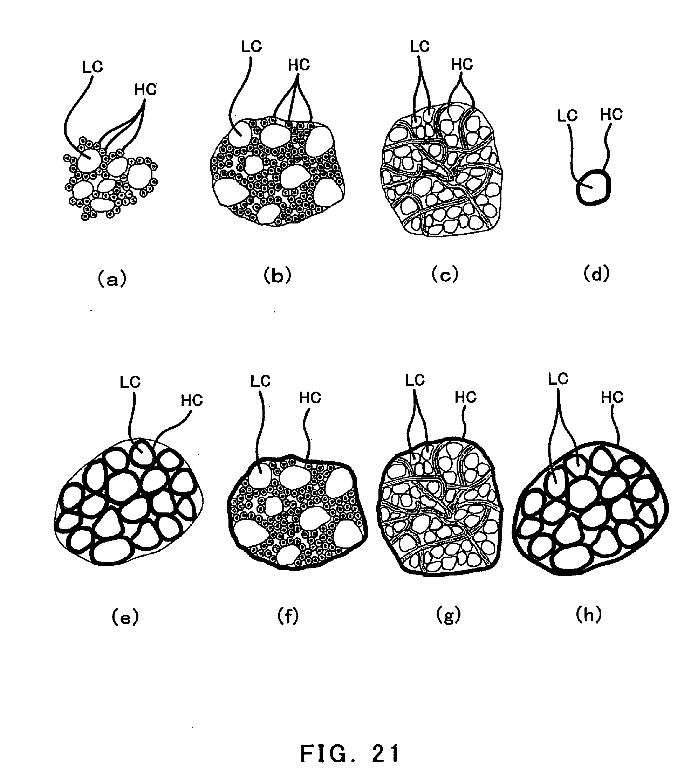

Desirable examples of the active material particles of the present invention are shown in Figs. 21 (a) to 21 (h).

(1) Particles Obtained by Mixing

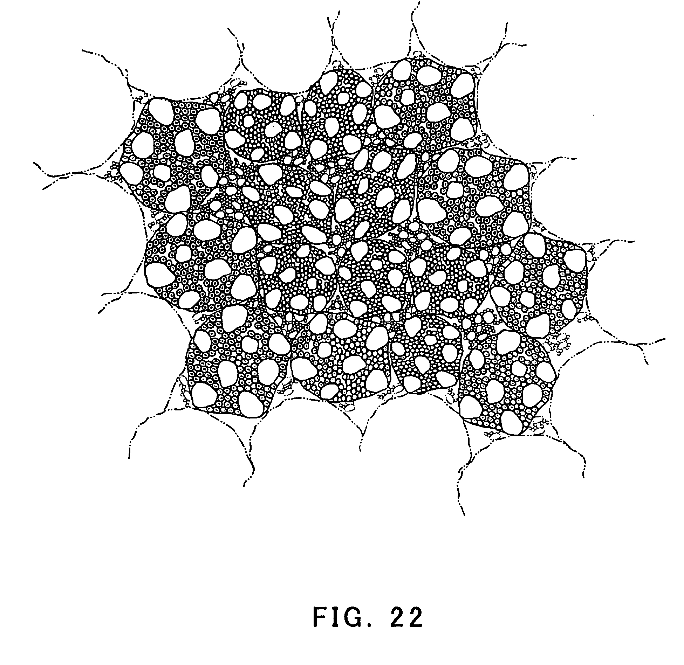

As shown in Fig. 21 (a), the particles are obtained by mixing a high electron-conductive material (HC) with a low electron-conductive material (LC). In Figs. 21 (a) to 21 (h) and 22, white parts represent LC and colored parts represent HC.

(2) Particles Obtained by Mixing and Granulation

As shown in Figs. 21 (b) and 21 (c), the particles are obtained by adding a binder (granulation agent) to a mixture of LC and HC and by granulating the mixture. In Fig. 21 (c), HC is fibrous.

(3) Particles Obtained by Coating

As shown in Fig. 21 (d), LC is coated with HC. This coating is carried out by known surface coating processes such as plating, vapor deposition, etc.

(4) Particles Obtained by Granulation of Coated Material

As shown in Fig. 21 (e), the particles are obtained by adding a binder (granulation agent) to LC coated with HC by plating or the like (see Fig. 21 (d)) and granulating the resulting material.

(5) Particles Obtained by Applying Coating to Granulated Material

As shown in Figs. 21(f), 21 (g), and 21 (h), granulated materials (see Figs. 21 (b), 21 (c), and 21 (e)) are coated with HC.

As used herein, the fixed layer of the active material particles is a layer formed by filling particles shown in Figs. 21 (a) to 21 (h) in a static state. Fig. 22 shows an enlarged part of the fixed layer of the active material particles. Fig. 22 shows that the mixtures (see Fig. 21 (a)) exist in gaps of granulated particles (see Fig. 21 (b)).

By forming the fixed layer filled with the above-mentioned active material particles, an electron conductivity of the fixed layer is improved, and electric discharge is performed at a high output.

The low electron-conductive materials are, for example, nickel hydroxide or hydrogen-occluding alloy.

The high electron-conductive materials are, for example, carbon particles, nickel particles, nickel foil, carbon fibers, or fibrous nickel.

As the binder, polytetrafluoroethylene, polypropylene, ethylene acetate vinyl copolymer (EVA), polystyrene, etc may be used, for example.

The particles obtained by granulation are desirably sized to have a diameter of approximately 10 $\mu$m to approximately 10mm, as shown in Figs. 21 (b), 21 (c), and 21 (e).

In the above-described battery of the present invention, the current collectors in contact with the active material particles may be formed in the shape of any one of a rod, a plate, and a pipe (see Figs. 1 to 3).

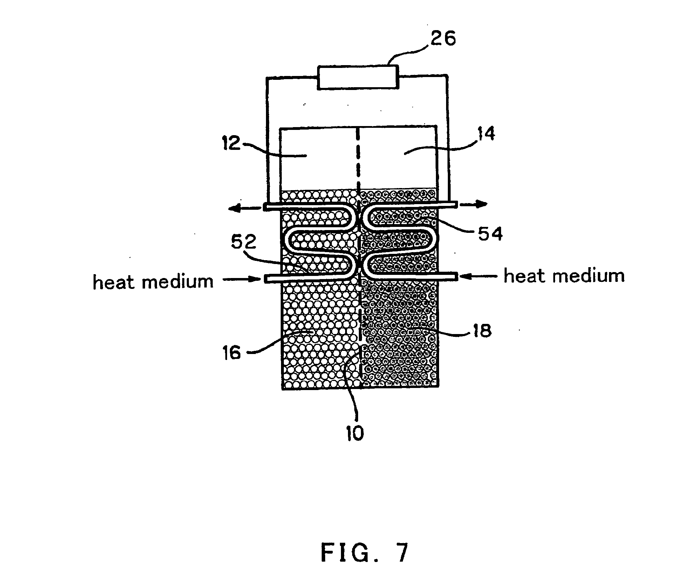

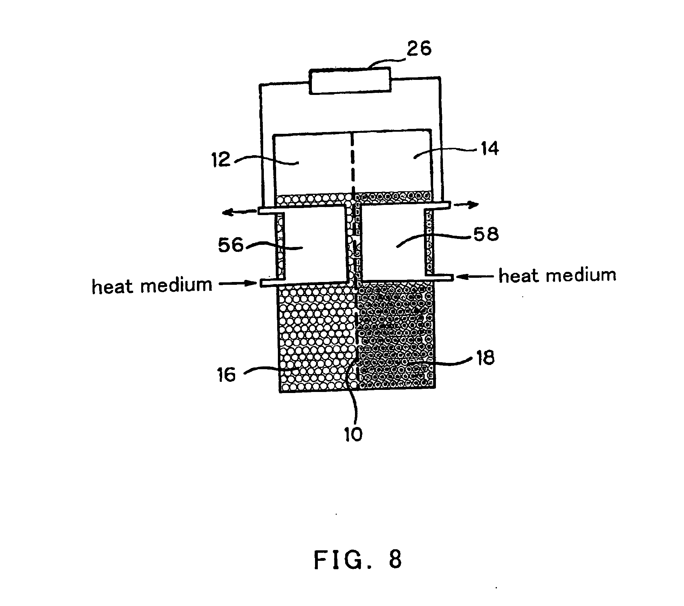

It would be preferable that, in the battery of the present invention, a heat transfer surface is installed within the vessels to keep a reaction temperature inside the battery constant. As the heat transfer surface, a pipe-shaped or plate-shaped current collector in contact with the active material particles may be used (see Figs. 7 and 8).

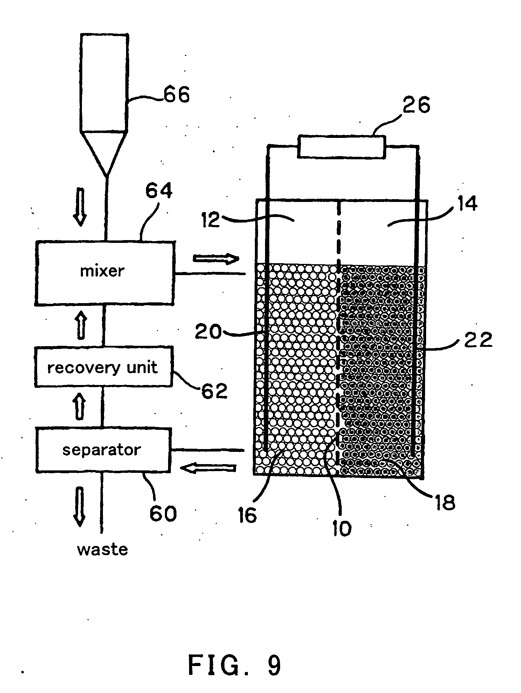

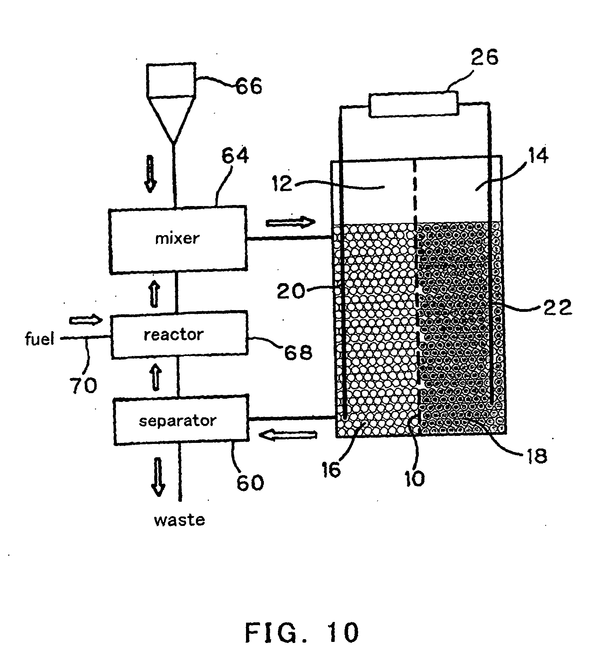

It would be preferable that in the battery of the present invention, a discharge means for discharging the degraded active material particles from the vessel and a feed means for feeding the active material power to the vessel are connected to the vessels (see Figs. 9 and 10).

In this case, at least one of a recovery means for recovering the discharged active material or a makeup means for making up the active material particles is connected to the discharge means to allow recovered or newly replaced active material particles to be fed from the feed means to the vessel (see Fig. 9).

Also, a reaction means that converts the discharged active material particles into charged active material particles through a thermal chemical reaction or an electrochemical reaction is connected to the discharge means to allow the charged active material particles to be fed from the feed means to the vessel (see Fig. 10).

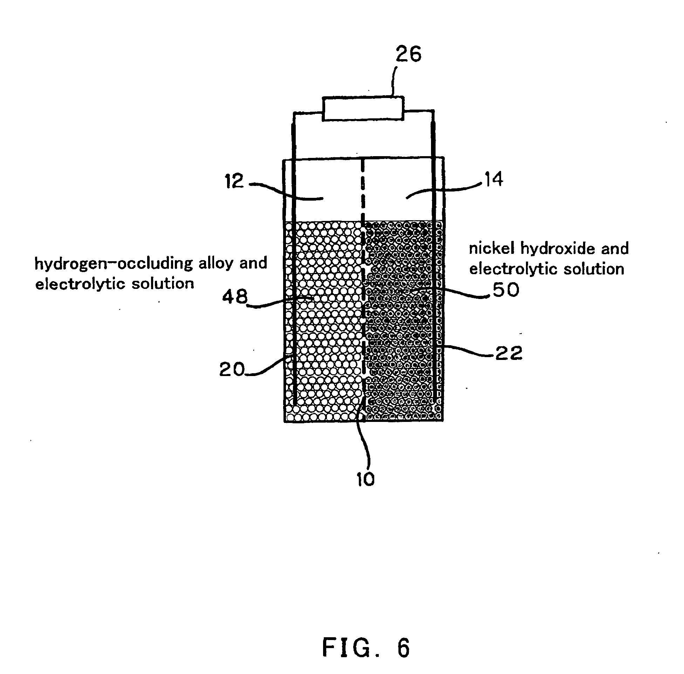

In the battery of the present invention, the active material particles on an anode side may be hydrogen-occluding alloy particles and the active material particles on a cathode side may be nickel hydroxide particles (see Fig. 6).

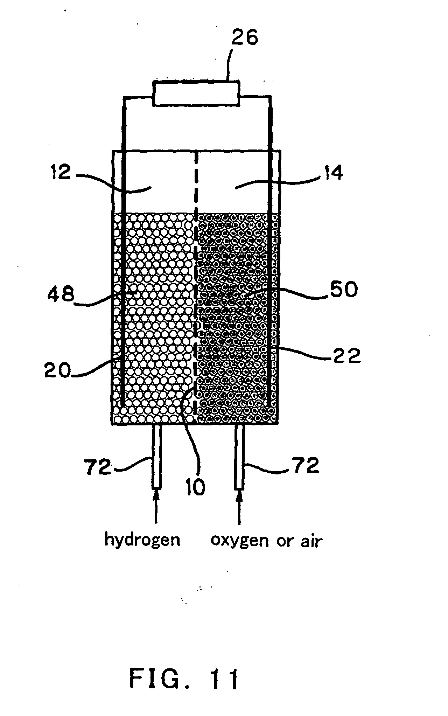

In the battery of the present invention, the active material particles on the anode side may be hydrogen-occluding alloy particles, a gas introduced to an anode side may be hydrogen, the active material particles on a cathode side may be nickel hydroxide particles, and a gas introduced to the cathode side may be oxygen or air (see Fig. 11).

Improvements of the battery of the present invention are as follows.

(1) Enlargement of scale is possible.

The current flowing through the battery is directly proportional to the surface area of a reactive material. Accordingly, by forming the battery using the active material particles, the battery is constructed such that the particles are filled within the vessels. The battery is three-dimensionally structured by using the particles. For example, in the case of the battery having a volume of 1 liter and a power of 1 W, if it is increased up to 1m$^3$, 10m$^3$, and 100m$^3$, the corresponding powers are 1kW, 1000kW, and 1 million kW, respectively, thus achieving enlargement of scale.

In addition, by forming the battery using the active material particles, the advantage by the enlargement of scale can be achieved.

For example, if the conventional battery of 1 kW costs 100 thousand yen, then, one million batteries are required to obtain 1 million kW and costs 100 billion yen. On the other hand, in the battery of the present invention, the enlargement of scale results in advantages. Specifically, the battery can be produced at a reduced production cost of about 100 million yen.

(2) The degraded active materials and catalysts can be recovered and replaced.

Active material and catalyst having the shape of particles are filled as fixed layers in electrolytic solutions. When the active material particles and catalyst particles are degraded, they are discharged, and recovered or replaced by new active materials and catalysts, or otherwise, they are restored to charged state through thermal-chemical reaction or electrochemical reaction, to be re-fed. For example, the active material particles and catalyst particles are discharged as a slurry along with the electrolytic solution from the vessel through a pipe. Then, the particles are separated from the electrolytic solution and re-mixed with the electrolytic solution after recovery or addition of new materials. The particles are fed in a slurry state to the battery by a slurry pump.

For example, the conventional small-sized battery is capable of charging and discharging about 500 times, and the conventional large-sized battery is activated for about 8000 consecutive hours. On the other hand, since in the battery of the present invention, the active material and the catalyst are kept in best conditions by circulation and recovery or makeup, the life of the battery, and hence the life of battery equipment can be extended 50 to 100 times.

(3) Heat transfer surfaces can be installed in the battery.

The active material particles and the catalyst particles are formed as fixed layers. Within the fixed layers, heat transfer surfaces are installed. Small heat transfer area is sufficient because heat transfer between the heat transfer area installed within the battery and the particles is there-dimensionally performed. The heat transfer surfaces installed within the battery allows a reaction temperature within the battery to be constant, which becomes compatible with a battery characteristic in which self-discharge ratio increases with increasing temperature whereas a reaction speed decreases with decreasing temperature. In addition, since the recovered heat and cool heat can be utilized for air conditioning or power generation, energy power generation efficiency and energy utilization efficiency can be increased.

(4) Energy density can be increased.

The current flowing through the battery is directly proportional to the surface area of the reactive material. Accordingly, the active material particles are used to create the battery. The creation of the battery using the active material particles increases the surface areas. For example, the active material particles of 1 $m^3$ has a surface area of approximately 300000 $m^2$ and hence has an increased energy density. Also, if the conventional battery has a membrane area of 1 $m^2$ and a power of 1W, then 3 million membrane batteries each having an area of 1 $m^2$ and a width of 0.1m are required to create a battery of 3000 kW and has a volume of 300000 $m^3$. If a battery capable of outputting a power equal to the power of the battery of the present invention uses active material particles having a particle diameter of 1 $\mu$m, then it has a volume of about 10 $m^3$ and has an energy density made 30000 times higher. Thus, the energy density can be increased.

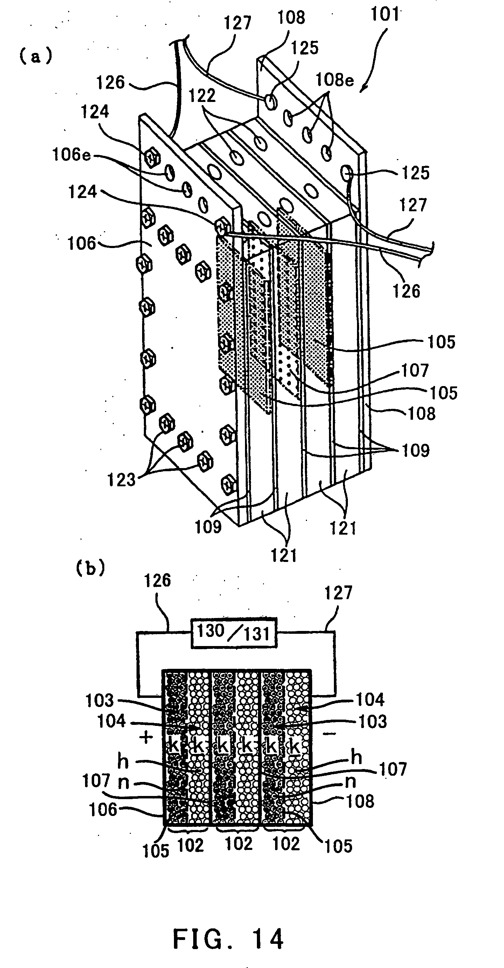

In order to achieve the above-described object, a layered three-dimensional battery of the present invention comprises plural sets of unit batteries, each of which is formed by filling an electrolytic solution in one of a pair of cells (vessels) and putting active material particles adapted to discharge electrons into the electrolytic solution to form a fixed layer, and by filling an electrolytic solution in the other cell (vessel) and putting active material particles adapted to absorb the electrons into the electrolytic solution to form a fixed layer, the pair of cells being connected to each other with a member interposed therebetween, the member being configured to permit passage of an ion and not to permit passage of the electron, electrically conductive current collecting members provided in contact with the active material particles and configured to serve as separating walls that define the cells, the unit batteries being connected in series to one another with each of the electrically conductive current collecting members interposed between the unit batteries, and current collectors provided on the cells at both ends of the unit batteries in contact with the active material particles and configured to serve as a cathode electrode and an anode electrode, respectively (see Figs. 14 to 19).

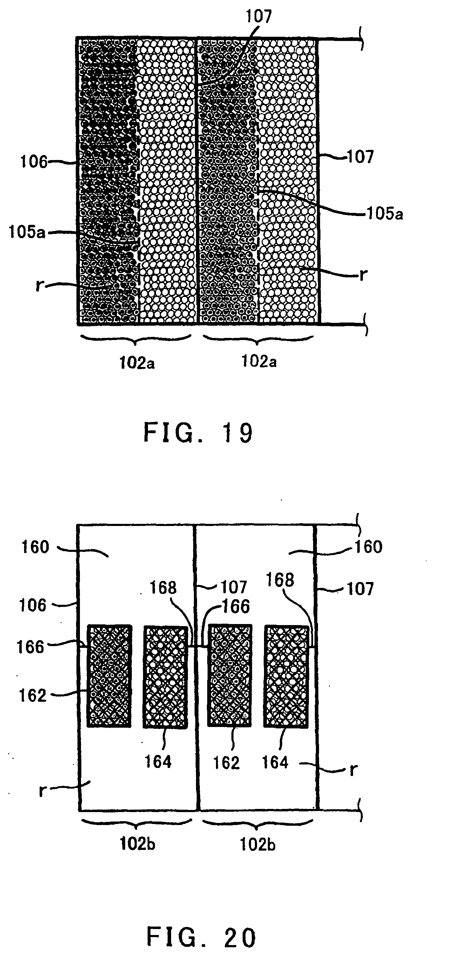

A layered three-dimensional battery of the present invention comprises plural sets of unit batteries, each of which is filled with electrolytic solutions within cells and includes a porous body that contains active material particles that form a fixed layer and discharge electrons in the electrolytic solution, and a porous body that contains active material particles that form a fixed layer and absorb the electrons in the electrolytic solution, and electrically conductive current collecting members provided in contact with the active material particles and configured to serve as separating walls that define the cells, the plurality of unit batteries being connected in series to one another with each of the electrically conductive current collecting members interposed between the unit batteries, and current collectors provided on the cells at both ends of the unit batteries in contact with the active material particles so as to serve as a cathode electrode and an anode electrode, respectively (see Fig. 20).

In these batteries, the particles in Figs. 21 (a) to 21 (h) are desirably used as the active material particles. The use of such particles allows electron conductivity of the fixed layer filled with the active material particles to be improved and electric discharge is performed at a high output. In accordance with the three-dimensionat battery of the present invention, the capacity (electric power amount) of the battery can be increased by increasing a volume of each cell. Assuming that a volume of 1 liter generates a power of 1 W, then power of 1 kW can be obtained by increasing the volume to 1 $m^3$ and a power of 10kW can be obtained by increasing the volume to 10 $m^3$. So, the enlargement of scale results in advantages in the production cost. Specifically, if the conventional battery of 10W costs 10 thousand yen, then the battery of 10kW costs 10 million yen. On the other hand, since the production unit cost of the battery of the present invention decreases with the scale up, the battery of the present invention costs about 1 million yen equal to 1/10 of the conventional battery.

The voltage is determined depending on the type (material) of active material particles (corresponding to the conventional electrodes) filled in the cells. For example, when metallic lead and lead dioxide are used, approximately 2.4V voltage is generated. So, it is necessary to connect 5 to 6 unit batteries in series to obtain a voltage of 12V or higher. However, in accordance with the present invention, unit batteries located at intermediate position (except opposite end positions) include current collecting members made of a common material on the anode side and on the cathode side. Since the cathode and anode electrodes are not needed unlike in the conventional battery, separating walls defining cells (unit batteries) are formed by electrically conductive current collecting members to enable electrical and structural series connection. And, the separating wall is configured to have a considerably small thickness (e.g., 0.5mm) and a large area (e.g., 127 mm $\times$ 127 mm). In addition, the current flows in the thickness direction of the separating wall. Therefore, a large current flows without substantial resistance and a power loss is extremely little.

Further, since the two pairs of unit batteries can be directly connected by means of the separating walls, plural unit batteries can be connected in series and in layer structure. Thereby, the whole battery is configured to have a minimum capacity and can be made small.

Furthermore, in the three-dimensional battery of the present invention, the active material particles function as a membrane (battery body) of the conventional battery of a membrane structure, and the current flowing through the battery is directly proportional to the surface area of the active materials. The active material particles form fixed layers in the electrolytic solutions. And, a total surface area of the whole active material particles becomes several tens hundred to several hundreds hundred times as large as that of the conventional battery of the membrane structure. So, the energy density becomes several tens hundred to several hundreds hundred times higher. Also, since the active material particles are put into the electrolytic solution (dilute sulfuric acid in lead battery) and used as the fixed layers, the degraded active material particles are separated from the electrolytic solution or the degraded active material particles and the electrolytic solution are replaced, thus recovering the active material particles. As a result, the life of the battery becomes significantly longer (approximately 50 times to 100 times).

In the three-dimensional battery, electrically conductive studs may be provided integrally and protrusively from the current collecting members or the current collectors toward inside of the respective cells. In accordance with the three-dimensional battery so constructed, since contact areas between the current collecting members or the current collectors and the active material particles greatly increase, and the contact resistance decreases, the width of each cell (spacing in the series direction) can be increased, and the capacity of the battery can be greatly increased.

With the battery of the present invention constituted as described above, the following effects can be obtained.

(1) Since the battery is structured to include active material particles put in the vessels in the form of fixed layers, it has a three-dimensional battery structure and the enlargement of scale becomes possible. In addition, by creating the battery using the active material particles, the production unit cost can be reduced with the increase in scale and the advantage by the enlargement of scale can be obtained.

(2) The degraded particles comprising active material and catalyst are discharged. These particles are recovered, replaced by new active material and catalyst or restored to a charged state by thermal chemical reaction or electrochemical reaction to be re-fed. Thereby, the active material and catalysts are kept in best conditions. As a result, the life of the battery, i.e., the life of battery equipment, can be significantly extended.

(3) The heat transfer surfaces installed within the battery allow a reaction temperature within the battery to be kept constant, which becomes compatible with a battery characteristic in which self-discharge ratio increases with increasing temperature whereas a reaction speed decreases with decreasing temperature. In addition, since the recovered heat and cool heat can be utilized for air conditioning or power generation, energy power generation efficiency and energy utilization efficiency can be increased.

(4) By forming the battery using active material particles, the surface area of the reactive material increases, and thereby energy density increases.

As should be appreciated from the forgoing, the layered three-dimensional battery of the present invention has the effects described below.

(1) In the three-dimensional battery of the present invention, since the capacity (electric power amount) of the battery can be increased by increasing a volume of each cell, the enlargement of scale results in advantages in production cost. In addition, since the battery is the fixed layers, its structure can be simplified.

(2) Since the voltage is determined by the type (material) of the active material filled in the shape of particles within the cells, it is necessary to connect a plurality of unit batteries in series to gain a large voltage. Since the current collecting members of both electrodes of the unit batteries are made of a common material, and a cathode electrode and an anode electrode are not formed unlike in the conventional battery, the electrically conductive current collecting members define the spacing between the cells (unit batteries) to enable electrical and structural series connection, and the thickness of the batteries can be reduced. So, the whole battery can be made compact and small-sized. In addition, since the current flows in the thickness direction, a large current flows without substantial resistance.

(3) Further, the active material particles function as a membrane (battery body) of the conventional battery of a membrane structure, and the current flowing through the battery is directly proportional to the surface area of the active materials. The active material particles form fixed layers in the electrolytic solutions. And, a total surface area of the whole active material particles becomes several tens hundred to several hundreds hundred times as large as that of the conventional battery of the membrane structure. So, the power density becomes several tens hundred to several hundreds hundred times higher. Also, since the active material particles are put into the electrolytic solution (dilute sulfuric acid in lead battery) to be mixed and used, the degraded active material particles and the electrolytic solution are replaced , thus recovering the active material particles. As a result, the life of the battery can be significantly extended.

(4) When electrically conductive studs are provided to extend from the current collecting members or the current collectors toward inside of the cells, a contact area between the current collecting members or the current collectors and the active material particles significantly increases, and contact resistance decreases. Thereby, the width of the cells (spacing between cells in the series direction) can be increased, and the capacity of the battery can be significantly increased.

## [BRIEF DESCRIPTION OF DRAWINGS]

Fig. 1 is a schematic cross-sectional view showing a structure of a battery according to a first embodiment of the present invention;
Fig. 2 is a schematic cross-sectional view showing an example of a structure of a battery according to a second embodiment of the present invention;
Fig. 3 is a schematic cross-sectional view showing another example of the structure of the battery according to the second embodiment of the present invention;
Fig. 4 is a schematic cross-sectional view showing an example of a structure of a battery according to a third embodiment of the present invention;
Fig. 5 is a schematic cross-sectional view showing another example of the structure of the battery according to the third embodiment of the present invention;
Fig. 6 is a schematic cross-sectional view showing a battery according to a fourth embodiment of the present invention;
Fig. 7 is a schematic cross-sectional view showing an example of a structure of a battery according to a fifth embodiment of the present invention;
Fig. 8 is a schematic cross-sectional view showing another example of the structure of the battery according to the fifth embodiment of the present invention;
Fig. 9 is a schematic cross-sectional view showing an example of a structure of a battery according to a sixth embodiment of the present invention;
Fig. 10 is a schematic cross-sectional view showing another example of the structure of the battery according to the sixth embodiment of the present invention;
Fig. 11 is a schematic cross-sectional view showing a structure of a battery according to a seventh embodiment of the present invention;
Fig. 12 is a schematic cross-sectional view showing a structure of a battery according to an eighth embodiment of the present invention;
Fig. 13 is a schematic cross-sectional view showing a structure of a battery according to a ninth embodiment of the present invention;
Fig. 14(a) is a perspective view showing an example of a verification test model of a layered three-dimensional battery according to a first embodiment of the present invention and Fig. 14(b) is a central longitudinal sectional view schematically showing the three-dimensional battery of Fig. 14(a);
Fig. 15 is a perspective view showing a portion of main components prior to assembling (in a disassembled state) of the verification test model of the layered three-dimensional battery of Figs. 14(a) and 14(b);
Fig. 16 is a central longitudinal sectional view schematically showing a layered three-dimensional battery according to a second embodiment of the present invention;
Fig. 17 is a central longitudinal sectional view schematically showing a layered three-dimensional battery according to a third embodiment of the present invention;
Fig. 18 is a central longitudinal sectional view schematically showing a layered three-dimensional battery according to a fourth embodiment of the present invention;
Fig. 19 is a cross-sectional view schematically showing an important part of a layered three-dimensional battery according to a fifth embodiment of the present invention;
Fig. 20 is a cross-sectional view schematically showing an important part of a layered three-dimensional battery according to a sixth embodiment of the present invention;
Figs. 21 (a) to 21 (h) are views schematically showing an image of active material particles of the present invention;
Fig. 22 is a partially enlarged view of an example of a fixed layer filled with active material particles of the present invention;
Fig. 23 is a central longitudinal sectional view schematically showing the conventional battery having a general membrane structure;
Fig. 24 is a central longitudinal sectional view schematically showing the conventional elongated battery having a general membrane structure;
Fig. 25 is a central longitudinal sectional view schematically showing the conventional batteries having a general membrane structure which are connected in parallel; and

Fig. 26 is a central longitudinal sectional view schematically showing the conventional batteries having a general membrane structure which are connected in series.

**[Best Mode for Carrying Out the Invention]**

Hereinafter, embodiments of batteries of the present invention will be described. It is to be understood that such embodiments are not to be interpreted as limiting, but various alternations and modifications may be suitably made.

Fig. 1 shows a battery according to a first embodiment of the present invention. As shown in Fig. 1, an anode cell 12 and a cathode cell 14 are provided with an ion permeable filter (separator) 10 interposed therebetween. The anode cell 12 is filled with anode active material particles and an electrolytic solution 16, and the cathode cell 14 is filled with a cathode active material particles and an electrolytic solution 18. The active material particles exist in the electrolytic solutions as fixed layers. In Fig. 1, and Figs. 2 through 20, the size of the active material particles is the same for the sake of convenience, but actually, the size may vary as a matter of course.

Examples of a combination of the active material particles for the anode and the cathode are hydrogen-occluding alloy and nickel hydroxide, cadmium and nickel hydroxide, etc. An example of the hydrogen-occluding alloy is $La_{0.3}$ $(Ce, Nd)_{0.15}$ $Zr_{0.05}$ $Ni_{3.8}$ $Co_{0.8}$ $Al_{0.5}$. As the electrolytic solution, for example, a KOH aqueous solution may be used. The separator 10 serves as an ion-permeable filter and does not serve as a particle-permeable membrane. As the separator 10, for example, an unglazed pottery, an ion exchange resin membrane, polymeric fibers, etc may be used.

An anode current collector 20 comprising an electric conductor and a cathode current collector 22 comprising an electric conductor are provided in the anode cell 12 and the cathode cell 14, respectively. The current collectors 20 and 22 are connected to a load means (for discharge) or a power generation means 26 (for charge). Reference numeral 28 denotes an electrolytic solution interface.

Subsequently, charge and discharge of the battery of this embodiment will be described in detail.

(Charge)

A voltage is applied to the battery and an electron is supplied from the anode current collector 20. The electron reacts with the anode active material particles immediately on the anode current collector 20 or reacts with the anode active material particles while traveling through the anode active material particles. An ion produced by the reaction passes through the separator 10 and enters the cathode cell 14, where it reacts with the cathode active material particles and discharges the electron. The electron moves to the cathode current collector 22 directly or through the active material particles and is supplied to the power generation means 26.

(Discharge)

A load is applied to the battery and an electron is supplied from the anode current collector 20. The electron is discharged from positively ionized active material within the anode cell 12. The electron moves to the anode current collector 20 directly or through the active material particles. An ion produced by the reaction passes through the separator 10 and enters the cathode cell 14, where it reacts with the cathode active material particles and the electron. The electron moves to the cathode current collector 22 directly or through active material particles and is supplied to the load means 26.

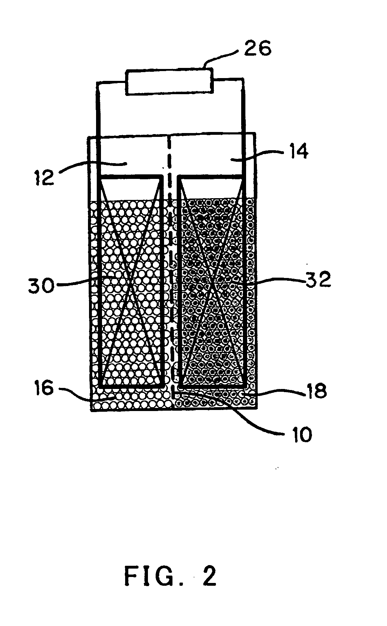

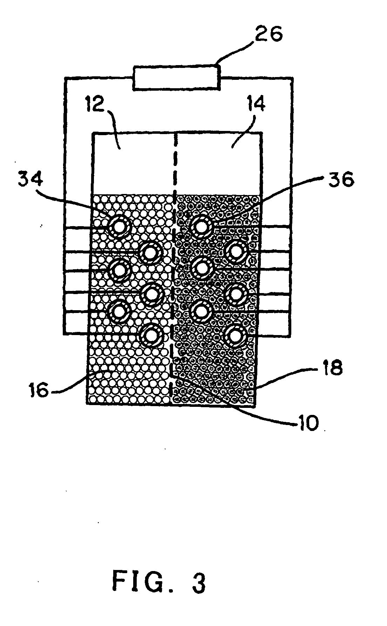

Figs. 2 and 3 show a battery according to a second embodiment of the present invention. Fig. 2 shows the battery structured such that an anode current collector and a cathode current collector are plate-shaped anode current collectors 30 and plate-shaped cathode current collectors 32 for increasing contact area for the purpose of improving the contact efficiency between the current collectors and the active material particles. Fig. 3 shows the battery structured such that an anode current collector and a cathode current collector are pipe-shaped anode current collectors 34 and pipe-shaped cathode current collectors 36 for increasing contact area for the purpose of improving the contact efficiency between the current collectors and the active material particles. Other than the plate and the pipe, shapes that allow the surfaces areas of the current collectors to increase may be employed.

The other constitution and function are similar to those of the first embodiment.

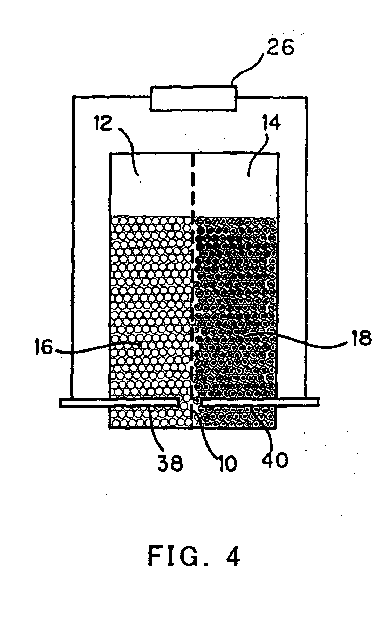

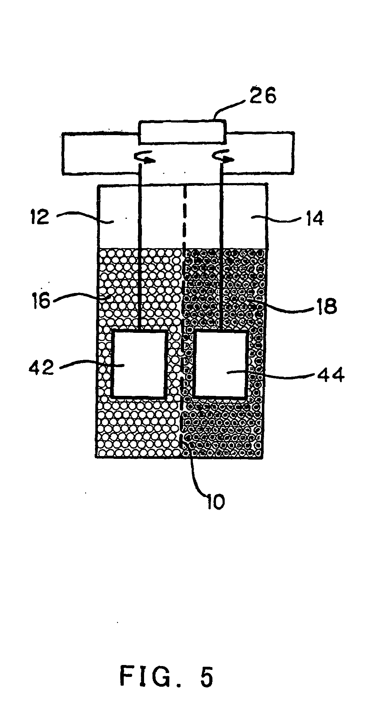

Figs. 4 and 5 show a battery according to a third embodiment of the present invention. As shown in Fig. 4, an anode current collector 38 and a cathode current collector 40 are provided within the fixed layers. And, as shown in Fig. 5, an anode current collector 42 and a cathode current collector 44 are agitators driven to rotate by a motor or the like (not shown), respectively.

In the battery in Fig. 4, agitation means such as vane-shaped agitators may be provided within the cells 12 and 14.

As shown in Fig. 5, the anode current collector and agitator 42 and the cathode current collector and agitator 44 serve to agitate the active material particles and directly contact the active material particles. The vane-like agitators or the like which are driven to rotate by motors or the like (not shown) may be used as the anode current collector and agitator 42 and the cathode current collector and agitator 44, but the constitution of the agitating means is not limited.

The other constitution and function are similar to those in the first embodiment.

Fig. 6 shows a fourth embodiment of the battery of the present invention. In this embodiment, hydrogen-occluding alloy and nickel hydroxide are provided as active material particles on an anode side and a cathode side, respectively.

As shown in Fig. 6, the anode cell 12 is filled with the particles comprising hydrogen-occluding alloy and an electrolytic solution 48 and the cathode cell 14 is filled with the particles comprising nickel hydroxide and an electrolytic solution 50. As the hydrogen-occluding alloy, for example, La $_{0.3}$ (Ce, Nd) $_{0.15}$ Zr $_{0.05}$ Ni $_{3.8}$ Co $_{0.8}$ Al $_{0.5}$, or the like is used. As the electrolytic solution, for example, KOH aqueous solution or the like may be used.

Charge and discharge of the battery of this embodiment will be described in detail.

(Charge)

A voltage is applied to the battery and an electron is supplied from the anode current collector 20. The electron reacts with the hydrogen-occluding alloy particles immediately on the anode current collector 20 or reacts with the hydrogen-occluding alloy particles while traveling through the hydrogen-occluding alloy particles as described below. M denotes the hydrogen-occluding alloy.

$$M + xH_2O + xe^- \rightarrow MHx + xOH^-$$

The hydroxyl ion generated thorough the reaction passes through the separator 10 and enters the cathode cell 14, where it reacts with the nickel hydroxide, and discharges the electron as follows.

$$Ni\,(OH)_2 + OH^- \rightarrow NiOOH + H_2\,O + e^-$$

The generated electron moves to the cathode current collector 22 directly or through the particles and is supplied to the power generation means 26.

(Discharge)

A load is applied to the battery. An electron is supplied from the anode current collector 20. Within the anode cell 12, hydrogen occluding alloy reacts with hydroxyl and an electron is discharged. The electron moves to the anode current collector 20 directly or through hydrogen-occluding alloy. The electron moves from the cathode current collector 22 to the nickel oxyhydroxide. The electron reacts with water immediately or while traveling through the nickel oxyhydroxide, thereby producing nickel hydroxide and hydroxyl. The hydroxyl passes trough the separator 10 and is introduced into the anode cell 2, where it reacts with hydrogen-occluding alloy.

The other constitutions and functions are similar to those of the first embodiment. The battery of this embodiment can be achieved in the constitutions of the second and third embodiments and in the constitutions of the fifth and sixth embodiments as described below.

Figs. 7 and 8 show batteries according to a fifth embodiment of the present invention. In this embodiment, heat transfer surfaces are installed within the battery and function as current collectors. It should be noted that the heat transfer surfaces and the current collectors may be separately provided. As shown in Fig. 7, an anode current collector and heat transfer tube 52 is provided within the anode cell 12 and a cathode current collector and heat transfer tube 54 is provided within the cathode cell 14. As shown in Fig. 8, an anode current collector and heat transfer plate 56 is provided within the anode cell 12 and a cathode current collector and heat transfer plate 58 is provided within the cathode cell 14.

With reference to Fig. 7, charge and discharge of the battery of this embodiment will be described in detail.

(Charge)

A voltage is applied to the battery. An electron is supplied from the anode current collector (heat transfer tube) 52. The electron reacts with the anode active material particles immediately on the anode current collector 52 or reacts with the active material particles while traveling through the active material particles. An ion generated by the reaction passes through the separator 10 and enters the cathode cell 14, where it reacts with the cathode active material particles and discharges an electron. The electron moves to the cathode current collector (heat transfer tube) 54 directly or through the active material particles and is supplied to the power generation means 8.

As described above, the current collectors also serve as heat transfer tubes on the both cathode and anode sides to simultaneously transfer the electron and heat by contact with the active material particles. A heat medium such as water and air is flowed through the anode current collector and heat transfer tube 52 and the cathode current collector and heat transfer tube 54, for recovering and supplying heat.

(Discharge)

A load is applied to the battery. An electron is supplied from the anode current collector 52. An electron is discharged from positively ionized active material within the anode cell 12. The electron moves to the anode current collector 52 directly or through the active material particles. The ion produced through the reaction passes through the separator 10 and enters the cathode cell 14, where it reacts with the cathode active material particles and the electron. The electron moves to the cathode current collector 54 directly or through the active material particles and is supplied to the load means 26.

The current collectors of Fig. 8 on the both anode and cathode sides also serve as hollow heat transfer plates to transfer the electron and heat simultaneously by the contact with the active material particles. The heat medium such as water and air is flowed to an anode current collector and heat transfer plate 56 and a cathode current collector and heat transfer plate 58, for recovering and supplying heat. The details of the charge and discharge are similar to those of Fig. 7. The shape of the heat transfer surfaces is not intended to be limited to pipe or plate but other shapes may be adopted.

The other constitutions and functions are similar to those of the first embodiment. It should be noted that the constitution of this embodiment can be combined with the constitutions of the second and third embodiments and a constitution of a sixth embodiment as described below.

Figs. 9 and 10 show a battery according to a sixth embodiment of the present invention. In this embodiment, a discharge device that discharges the active material particles from the vessel and a supply device that supplies the active material particles to the vessel are provided. Further, there are provided a device that recovers the discharged active material particles, a device that makes up the particles, and a device that converts the discharged active material particles into active material particles in a charged state through a thermal chemical reaction or an electrochemical reaction.

First, charge and discharge of the battery of this embodiment will be described in detail.

(Charge)

A voltage is applied to the battery. An electron is supplied from the anode current collector 20. The electron reacts with the anode active material particles immediately on the anode current collector 20 or reacts with the active material particles while traveling through the active material particles. An ion produced by the reaction passes through the separator 10 and enters the cathode cell 14, where it reacts with the cathode active material particles and discharges an electron. The electron moves to the cathode current collector 22 directly or through the active material particles and is supplied to the power generation means 26.

(Discharge)

A load is applied to the battery. An electron is supplied from the anode current collector 20. An electron is discharged from positively ionized active material within the anode cell 12. The electron moves to the anode current collector 20 directly or through the active material particles. The ion produced through the reaction passes through the separator 10 and enters the cathode cell 14, where it reacts with the cathode active material particles and the electron. The electron moves to the cathode current collector 22 directly or through the active material particles and is supplied to the load means 26.

The other constitution and function are similar to those of the first embodiment.

Subsequently, with reference to Fig. 9, recovery and makeup of the active material (or catalysts) will be described in detail. Although only a constitution on an anode side is illustrated, a similar device is also installed on a cathode side.

As shown in Fig. 9, the active material particles degraded after the charge and discharge is discharged from the anode cell 12 as a slurry along with an electrolytic solution (electrolytic liquid), and a part of or all of the active material particles are discarded by a separator 60 as necessary. The electrolytic liquid is separated and the active material particles are supplied from a separator 60 to a recovery unit 62, where the particles are subjected to acid treatment such as cleansing using hydrochloric acid. The active material particles recovered by the recovery unit 62 are supplied to a mixer 64 to which new particles equal in amount to the particles discarded by the separator 60 are supplied from a makeup particles hopper 66. The recovered and makeup particles are re-mixed with the electrolytic liquid by the mixer 64 and supplied as the slurry from a slurry pump (not shown) to the anode cell 2. The constitution for separating and mixing the electrolytic liquid is not illustrated in the drawing.

With reference to Fig. 10, recovery and makeup in association with the reaction of the battery of this embodiment will be described in detail. In Fig. 10, although only the constitution on the anode side is illustrated, the same device or the like is also provided on the cathode side.

As shown in Fig. 10, the active material particles generated by the charge and discharge is discharged from the anode cell 12 as slurry along with the electrolytic solution, and a part or all of the active material particles are discarded by the separator 60 as necessary. The electrolytic liquid is separated and the particles are supplied from the separator 60 to a reactor 68, where it reacts with a fuel supplied from a fuel supply tube 70 and is converted into a dischargeable active material again. The charged active material particles in the reactor 68 are supplied to the mixer 64, to which new particles equal in amount to the active material particles discarded by the separator 60 is supplied from the makeup particles hopper 66. The recovered and makeup particles are re-mixed with the electrolytic liquid by the mixer 64 and supplied as the slurry from a slurry pump (not shown) to the anode cell 12. The constitution for separating and mixing the electrolytic liquid is not illustrated in the drawing.

In the reactor 68, in the case of a nickel-hydrogen battery, the following reaction is conducted:

$$M + (x / 2) H_2 \rightarrow MHx$$

M: hydrogen-occluding alloy

As a result, an active material identical to MHx generated in the following reaction during charge is produced:

$$M + xH_2O + xe^- \rightarrow MHx + xOH^-$$

In the reactor on the cathode side, in the case of the nickel-hydrogen battery, the following reaction by oxygen or air is conducted:

$$Ni (OH)_2 + 1/4 \ O_2 \rightarrow NiOOH + 1/2H_2 \ O$$

As a result, an active material identical to NiOOH generated in the following reaction during charge is produced:

$$Ni (OH)2 + OH^- \rightarrow NiOOH + H2 \ O + e^-$$

The constitution of this embodiment can be suitably combined with the constitutions of the second, third, and fifth embodiments.

Fig. 11 shows a battery according to a seventh embodiment of the present invention. In this embodiment, the hydrogen-occluding alloy is used as the anode active material particles, hydrogen is used as anode agitating gas, nickel hydroxide is used as the cathode active material particles, and oxygen or air is used as cathode agitating gas. As shown in Fig. 11, the anode cell 12 is filled with hydrogen-occluding alloy and an electrolytic solution 48, and the cathode cell 14 is filled with the nickel hydroxide and an electrolytic solution 50. 72 denotes a gas feed pipe. The gas feed pipe 72 feeds hydrogen to the anode cell 12 and oxygen or air to the cathode cell 14 . An example of the hydrogen-occluding alloy is La $_{0.3}$ (Ce, Nd) $_{0.15}$ Zr $_{0.05}$ Ni $_{3.8}$ Co $_{0.8}$ Al $_{0.5}$, and the like. An example of the electrolytic solution is a KOH aqueous solution, and the like.

In the anode cell 12, hydrogen is fed to the hydrogen-occluding alloy (M) and the electrolytic solution 48 and the following reaction is conducted:

$$M + x/2H_2 \rightarrow MHx$$

When a load is applied by the load means 26, hydrogen occluded in the hydrogen-occluding alloy reacts with hydroxyl in the electrolytic solution and discharges an electron and water:

$$MHx + xOH^- \rightarrow M + xH20 + xe^-$$

The discharged electron moves to the anode current collector 20 directly or through the hydrogen-occluding alloy. The electron travels from the anode current collector 20 to the cathode current collector 22 through the load means 26. The electron moves from the cathode current collector 22 to nickel oxyhydroxide. The electron reacts with water immediately or while traveling through the nickel oxyhydroxide, thereby producing nickel hydroxide and hydroxyl. The hydroxyl passes through the separator 10, and is introduced into the anode cell 12, where it reacts with hydrogen-occluding alloy.

$$NiOOH + H_2O + e^- \rightarrow Ni (OH)_2 + OH^-$$

In the cathode cell 14, in the case of the nickel-hydrogen battery, the following reaction is conducted by using oxygen or air.

$$Ni (OH)_2 + 1/4 \ O_2 \rightarrow NiOOH + 1/2 \ H_2O$$

As a result, an active material identical to NiOOH generated in the following reaction during charge is generated:

$$Ni (OH)_2 + OH^- \rightarrow NiOOH + H_2O + e^-$$

The other constitution and function are similar to those of the first embodiment. As a matter of course, the battery of this embodiment may be realized with the constitutions of the second, third, fifth, and sixth constitutions.

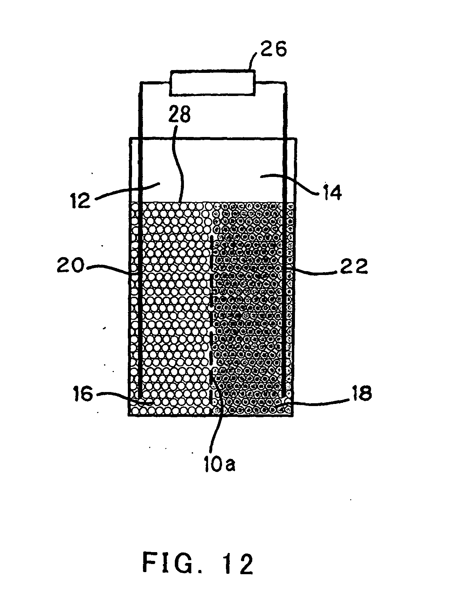

Fig. 12 shows a battery according to an eighth embodiment of the present invention. In this embodiment, an ion-permeable separator 10a is provided to extend from the bottom to a vertical position so as not to reach an upper portion. The other constitution and function are identical to those of the first to seventh embodiments.

Fig. 13 shows a battery according to a ninth embodiment of the present invention. In this embodiment, the battery is structured such that a vessel 74 is not separated by a separating member and is filled with an electrolytic solution 76. In the electrolytic solution 76, a bag 78 made of a porous material that contains active material particles formed as a fixed layer and adapted to discharge the electron, and a bag 80 made of a porous material that contains active material particles formed as a fixed layer and adapted to absorb the electron, are provided, and electrically conductive current collectors, i.e., an anode current collector 82 and a cathode current collector 84 are respectively connected to the bags 78 and 80 to be contact with the active material particles. Instead of the bag, other shapes such as container, may be used. As the porous material, a foam nickel sheet may be used. The other constitution and function are identical to those of the first to seventh embodiment. Hereinafter, embodiments of the three-dimensional batteries of the present invention will be described with reference to the drawings.

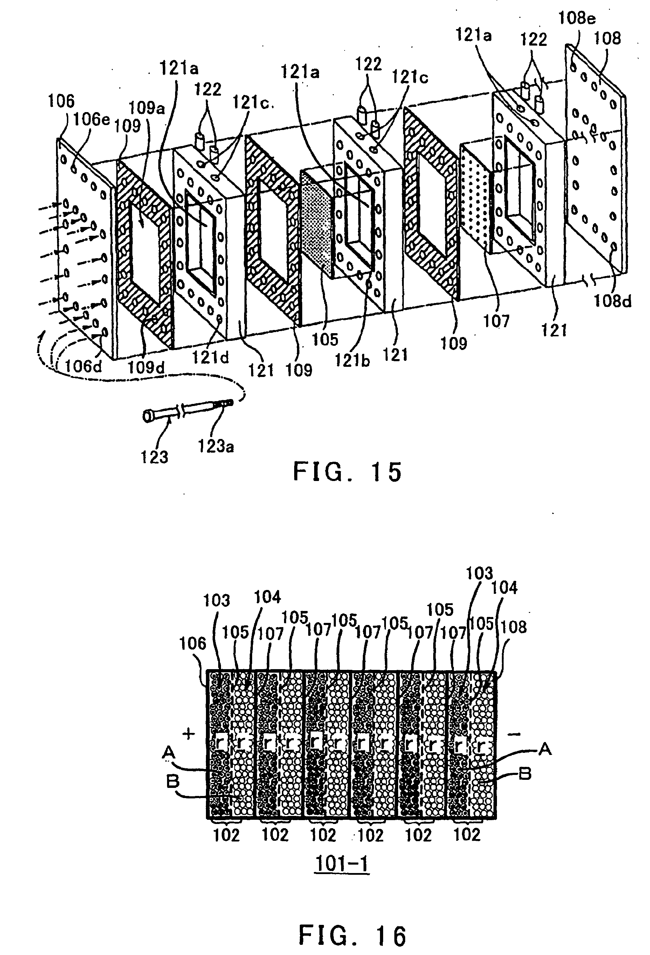

Fig. 14 is a perspective view and a schematic cross-sectional view showing an example of a verification test model of a layered three-dimensional battery according to a first embodiment of the present invention, and Fig. 15 is a perspective view showing a part of main components prior to assembling (in a disassembled state) of the verification test model of Figs. 14.

As shown in Fig. 14, a layered three-dimensional battery 101 is nickel-hydrogen battery. As shown in Fig. 15, the battery is structured to have a pair of two cell (vessel) members 121 each having a square central opening 121 a penetrating therethrough in a thickness direction thereof. In the example in Fig. 14, two pairs (four in total) of cell members 121 are provided. As shown in Fig. 15, a shallow (in this example, 0.5mm deep) concave portion 121 b is formed annularly on a periphery of the opening 121 a of each of the cell members 121. A substantially-square and alkali resistant ion-permeable separator (in this example Teflon separator) 105 is fitted into the concave portion 121 b between the cell members 121. The separator 105 is a membrane which permits only ions to pass therethrough but does not permit active materials n, h or electricity to pass therethrough. In addition to the above, an unglazed pottery, an ion exchange resin membrane, glass, or the like is used. Two injection ports 121 c are formed on an upper surface of each of the cell members 121 such that they vertically penetrate to face the opening 121 a and are spaced apart from each other in the width direction thereof. Rubber plugs 122 are removably attached to the respective injection ports 121 c.

A substantially-square, alkali-resistant, electrically conductive, and plate-shaped current collecting member (in this example, nickel plate) 107 is fitted into the concave portion 121 b between the cell members 121 in each pair. Alkali-resistant and electrically conductive current collectors (in this example, nickel plate) 106 and 108 are provided on both ends of the two pairs of the cell members 42. The current collectors 106 and 108 are equal in width to the cell member 121 and larger in height than the cell member 121. Rubber packings 109 are respectively interposed between the cell members 121, between the cell member 121 and the current collector 106, and the cell member 121 and the current collector 108. The rubber packings 109 have openings 109a shaped identically to the openings 121 a in central portions thereof and have outer shapes identical to those of the cell members 121. A plurality of insertion holes 121 d, 109d, 106d, and 108d are sequentially formed on peripheries of the openings 121a and 109a in the cell members 121, the packings 109, and the current collectors 106 and 108 such that these holes penetrate in the thickness direction thereof and are spaced apart along the peripheries. Non-electrically conductive bolts 123 are inserted through the plurality of insertion holes 121 d, 109d, 106d, and 108d and nuts (not shown) are securely screwed to tip screw portions 123a of the bolts 123. Small holes 106e and small holes 108e are respectively formed at upper end portions of the left-end (cathode) and right-end (anode) current collectors 106 and 108 such that these holes are spaced apart in the width directions thereof. In this example, cathode terminals 124 and anode terminals 125 are respectively fitted to the small holes 106e of the left-end current collector 106 and the small holes 108e of the right-end current collector 108 and one end portions of wires 126 and 127 are connected to these terminals.

A potassium hydroxide aqueous solution k as the electrolytic solution is injected into each of the cell members 121 through the injection ports 121 c. Nickel hydroxide n as the cathode active material particles, hydrogen-occluding alloy h as the anode active material particles, the nickel hydroxide n as the cathode active material particles, the hydrogen-occluding alloy h as the anode active material particles are put into the potassium hydrogen aqueous solution k sequentially from the left-end cell member 121 of Fig. 14(b). As a result, from the left end to the right end of Fig. 14(b), a cathode cell 103, an anode cell 104, the cathode cell 103, and the anode cell 104 are sequentially formed.

The layered three-dimensional battery 101 is thus constituted. The battery 101 of this example is structured such that two nickel-hydrogen unit batteries (secondary batteries) are connected in series to generate a voltage of approximately 2.4v. The load means 130 such as 2.4v electric bulb is connected between the cathode terminal 124 and the anode terminal 125 of the battery 101 by means of the wires 126 and 127. During charge, the nickel oxyhydroxide n within the cathode cell 103 which is in contact with a left-end cathode current collector 106 provided with the cathode terminals 124 receives an electron (e-) from the cathode current collector 106. The electron (e-) is supplied to nickel oxyhydroxide n along with hydrogen ion to produce nickel hydroxide. Within the anode cell 104, the hydrogen-occluding alloy h discharges the electron (e-) and the hydrogen ion (H+), and the hydrogen ion passes through the ion-permeable separator 105 and travels to the cathode cell 103. In summary, the following reaction is conducted in the cathode cell 103:

$$NiOOH + H^+ + e^- \rightarrow Ni\,(OH)_2$$

$$MHx \rightarrow M + xH^+ + xe^-$$

M: hydrogen-occluding alloy

Following this, the electron (e⁻) passes through a contact portion of the hydrogen-occluding alloy h and is collected to the current collecting member 107 forming a separating wall between the anode cell 104 and the cathode cell 103 of the second unit battery 56, and the nickel oxyhydroxide n within the cathode cell 103 of the second unit battery receives the electron (e⁻) from the current collecting member 107. The electron (e⁻) is fed to the nickel oxyhydroxide n to produce nickel hydroxide. Within the anode cell 104, the hydrogen-occluding alloy h discharges the electron (e⁻) and the hydrogen ion (H⁺) is generated. The electron (e⁻) discharged into the anode cell 104 is collected to the anode current collector 108 and moves from the anode terminal 125 to the load means 131 through the wire 127, and moves to the cathode current collector 106 through the wire 126. Thereby, a current flows from the cathode terminal 124 of the cathode current collector 106 to the load means 130, and to the anode terminal 125 of the anode current collector 108. In this way, a voltage of $1.2V \times 2$ (2.4V) is generated.

On the other hand, the three-dimensional battery 101 is charged in the following manner. A charger 131 applies a predetermined voltage to the battery 101 to cause the electron (e⁻) to be fed from the anode current collector 108 (anode terminal) 125 to the anode cell 104. The electron (e⁻) moves to the hydrogen-occluding alloy h, thereby causing the following reaction to be conducted to generate a hydroxyl ion.

$$M + xH_2O + xe^- \rightarrow MHx + xOH^-$$

M: hydrogen-occluding alloy

The hydroxyl ion (OH⁻) generated within the anode cell 104 passes through the ion-permeable separator 105 and moves into the cathode cell 103 on the left side, where it reacts with the nickel hydroxide n according to the following formula and discharges the electron (e⁻).

$$Ni(OH)_2 + OH^- \rightarrow NiOOH + H2O + e^-$$

The electron (e⁻) discharged into the cathode cell 103 is collected to the current collecting member 107 and moves to the hydrogen-occluding alloy h within the anode cell 104 on the left side. Thereby, the reaction represented by the above formula is conducted and a hydroxyl ion is generated. The hydroxyl ion (OH⁻) generated within the anode cell 104 passes through the ion-permeable separator 105 and moves into the cathode cell 103 at the left end, where it reacts with the nickel hydroxide n according to the above formula and discharges the electron (e⁻). The electron (e⁻) is collected to the cathode current collector 106 (cathode terminal 124) and sent to the charger 131.

Fig. 16 is a central longitudinal sectional view schematically showing a layered three-dimensional battery according to a second embodiment of the second invention.

As shown in Fig. 16, a three-dimensional battery 101-1 of this embodiment is a lead battery structured such that 6 pairs of unit lead batteries 102 are connected in series. The unit lead battery 102 comprises a cathode cell 103 and an anode cell 104 which are separated by an acid-resistant and ion-permeable separator 105 provided in a middle portion thereof. A leftmost wall of the cathode cell 103 of a leftmost (first pair) unit battery 102 and a rightmost wall of the anode cell 104 of a rightmost (sixth pair) unit battery 102 are respectively formed by side walls of acid-resistant electrical conductors (platinum plate or lead plate) as current collectors 106 and 108. A right end wall of the anode cell 104 of the unit battery 102 in the first pair and a left end wall of the cathode cell 103 of the unit battery 102 in the sixth pair are respectively formed by side walls of acid-resistant electrical conductors (platinum plate or lead plate) as current collecting members 107. A four pairs of unit batteries 102 located at an intermediate position are connected in series by means of the acid-resistant electrical conductors (platinum plate or lead plate) as the current collecting members 107 serving as separating walls defining the unit batteries 102 in respective pairs. The leftmost (first pair) unit battery 102 and the rightmost (sixth pair) unit battery 102 are connected in series by means of the acid-resistant electrical conductor side walls (platinum plates or lead plates) as the current collecting members 107.

In this example, each of the cells 103 and 104 is filled with a dilute sulfuric acid solution (sulfuric acid aqueous solution) r as a common electrolytic solution. Particles A of lead dioxide ($PbO_2$) is put into the dilute sulfuric acid solution within the cathode cell 103 and formed into a fixed layer. Particles B of metallic lead (Pb) is put into the dilute sulfuric acid solution within the anode cell 104 and formed into a fixed layer.

The three-dimensional battery 101-1 according to the second embodiment as described above discharges as follows. Specifically, the cathode cell 103 in contact with the leftmost cathode current collector 106 receives an electron from the current collector 106 and the electron is fed to the lead dioxide A, and lead sulfate ($PbSO_4$) is produced by the reaction and an ion is generated according to the following formula:

$$PbO_2 + H_2SO_4 + 2H^+ + 2e^- \rightarrow PbSO_4 + 2H_2O$$

Then, an ion within the cathode cell 103 moves through the ion-permeable separator 105 and into the cathode cell 104, where it reacts with metallic lead B and discharges the electron and the metallic lead is oxidized to produce lead sulfate according to the following formula:

$$Pb + H_2SO_4 \rightarrow PbSO_4 + 2H^+ + 2e^-$$

The electron within the anode cell 104 is collected to the current collecting member 107 and moves into the left-side cathode cell 103 adjacent this collecting member 107 to be fed to the lead dioxide A, and lead sulfate ($PbSO_4$) is produced by the reaction, thereby generating an ion. The ion within the cathode cell 103 moves into the anode cell 104 through the ion-permeable separator 105. The ions reacts with the metallic lead B and discharges an electron. The metallic lead B is oxidized into lead sulfate. This reaction is repeated in each unit battery 102. The electron moves from the rightmost anode current collector 108 to the leftmost cathode current collector 106 through a load means (not shown), while a current flows from this cathode current collector 106 to the rightmost anode current collector 108 through the load means 130 (Fig. 14). In this example, a voltage of about 13.6V is generated. It should be noted that any acid-resistant electrical conductors may be used as the current collectors or electrodes. For example, carbon or electrically conductive polymer may be used.

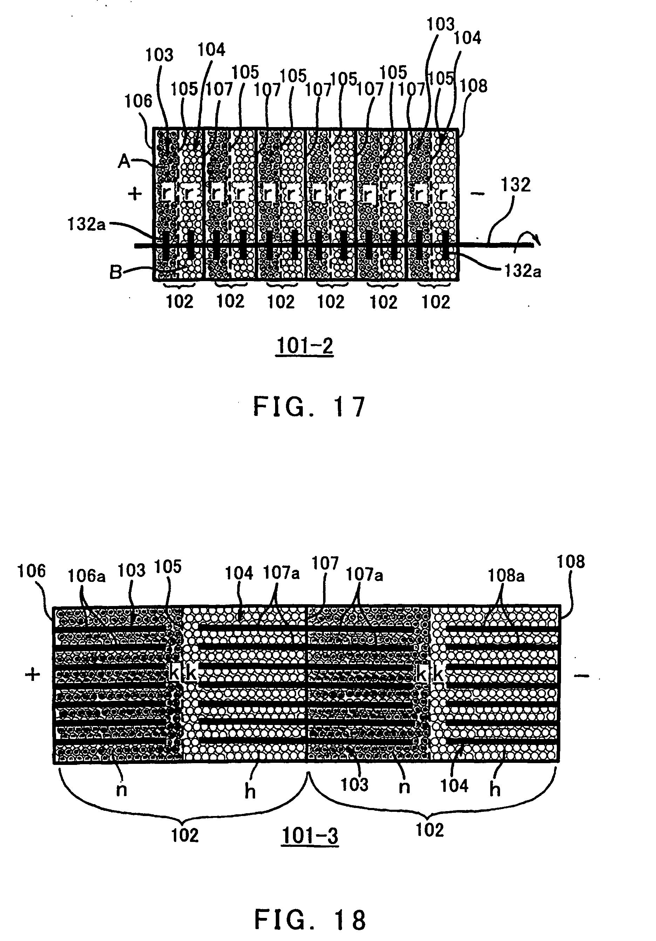

Fig. 17 is a central longitudinal sectional view schematically showing a layered three-dimensional battery according to a third embodiment of the present invention.

As shown in Fig. 17, a three-dimensional battery 101-2 of this embodiment is a lead battery as in the second embodiment of Fig. 16. A rotational shaft 132 is rotatably installed in the battery 101-2 so as to axially penetrate through the battery 101-2, and is rotated manually or by a rotation drive device (not shown). A plurality of agitation vanes 132a are attached on the rotational shaft 132 at positions corresponding to the cells 103 and 104 such that they protrude in the direction perpendicular to the rotational shaft 132 and are configured to agitate the dilute sulfuric solutions r within the cells 103 and 104 along with lead dioxide A or metallic lead B by rotation of the rotational shaft 132. This constitution differs from that of the battery 101-1 of the second embodiment.

In accordance with the three-dimensional battery 101-2 of the third embodiment, the lead dioxide A and the metallic lead B as particulate electrodes are agitated to provide good contact between the particulate electrodes A and B and the current collectors 106 and 108 or the current collecting member 107 . Therefore, a capacity of each of the cells 103 and 104 (cell member 121: see Fig. 14) can be increased and a power can be correspondingly increased. In addition, since adhesion of lead sulfate particles can be inhibited, lead plates can be used as the current collectors 106 and 108 and the current collecting members 107. Since the battery 101-2 of the third embodiment is identical to the battery 101-1 of the second embodiment except the agitating means 132, the corresponding parts are referenced to by the same reference numerals and description thereof is omitted.

Fig. 18 is a central longitudinal sectional view schematically showing a layered three-dimensional battery according to a fourth embodiment of the present invention.

As shown in Fig. 18, a three-dimensional battery 101-3 of this embodiment is a nickel-hydrogen secondary battery as in the first embodiment of Fig. 14. In the battery 101-3, capacities of the cathode cell 103 and the anode cell 104 are significantly increased. A number of studs 106a, 107a, and 108a protrude from the current collectors 106 and 108 and the current collecting member 107 toward the inside of the cathode cell 103 and the inside of the anode cell 104 such that these studs are spaced apart from one another. In this embodiment, since nickel plates are used as the current collectors 106 and 108 and the current collecting member 107, the studs 106a, 107a, and 108a which are integral with the current collectors 106 and 108 and the member 107 are also formed by the nickel plates. While in the battery 101-3 of this embodiment, the capacities of the cells 103 and 104 are significantly increased, electricity (electrons and current) can be well transmitted because the particulate electrodes n, and h are reliably in contact with the current collectors 106 and 108 and the current collecting member 107 with the studs disposed between them. The agitating means 132 of the third embodiment may be combined into the battery 101-3 of this embodiment.

Fig. 19 shows a layered three-dimensional battery according to a fifth embodiment of the present invention. In this embodiment, an ion-permeable separator 105a is provided to extend from the bottom to a vertical position so as not to reach the upper portion within a cell (vessel). The other constitution and function are identical to those of the first to fourth embodiments.

Fig. 20 shows a layered three-dimensional battery according to a sixth embodiment of the present invention. In this embodiment, the battery is structured such that a cell 160 is not separated by a separating member and is filled with an electrolytic solution r. In the electrolytic solution r, a bag 162 made of a porous material that contains active material particles formed as a fixed layer and adapted to absorb the electron, and a bag 164 made of a porous material that contains active material particles formed as a fixed layer and adapted to discharge the electron, are provided, and electrically conductive current collectors, i.e., the cathode current collector 166 and the anode current collector 168 are respectively connected to these bags 162 and 164 in contact with the active material particles. Instead of the bag, other shapes such as container, may be used. As the porous material, a foam nickel sheet may be used. The other constitution and function are identical to those of the first to fourth embodiments.

Thus far, embodiments of the three-dimensional battery of the present invention have been described.

1) Other than the above-mentioned materials, nickel hydroxide and cadmium, or nickel hydroxide and iron, nickel hydroxide and iron carbide ($Fe_3 C$), cobalt (or manganese) and lithium, or nickel hydroxide and zinc, may be used as the cathode active material particles and the anode active material particles.

2) Two to six unit secondary batteries 102 are connected in series by means of the electrically conductive (acid-resistant or alkali-resistant) members 107 in the above-described embodiments, but any number of unit batteries may be connected in series according to a required voltage.

3) The capacity of the battery can be adjusted by increasing the capacities of the cell members 121 according to a required power capacity and by providing the agitating means or studs as desired.

[Industrial Applicability]

The present invention constituted as described above is well applicable to a fixed-layer type battery structured such that active material particles are filled in a vessel and a layered three dimensional battery which provides advantages in association with the enlargement of scale.

**Claims**

1. A battery comprising two vessels connected to each other with a member interposed therebetween and filled with electrolytic solutions, the member being configured to permit passage of an ion; active material particles filled in the electrolytic solution to form a fixed layer within one of the vessels and adapted to discharge the electrons; and active material particles filled in the electrolytic solution to form a fixed layer within the other vessel and adapted to absorb the electrons, wherein electrically conductive current collectors are provided in contact with the active material particles within the two vessels.

2. A battery comprising vessels filled with electrolytic solutions; a porous body that contains active material particles formed as a fixed layer in the electrolytic solution and adapted to discharge electrons; a porous body that contains active material particles formed as a fixed layer in the electrolytic solution and adapted to absorb the electrons; and electrically conductive current collectors connected to the porous bodies in contact with the active material particles.

3. The battery according to Claims 1 or 2, wherein the active material particles are obtained by mixing a high electron-conductive material with a low electron-conductive material, by mixing a high electron-conductive material with a low electron-conductive material and granulating a mixture of the materials, by applying a coating of a high electron-conductive material to a low-electron conductive material, by applying a coating of a high electron-conductive material to a low-electron conductive material and mixing and granulating the materials, or by applying a coating of a high electron-conductive material to the granulated materials.

4. The battery according to Claims 1, 2, or 3, wherein the current collectors in contact with the active material particles have a shape of any one of a rod, a plate, and a pipe.

5. The battery according to any one of Claims 1 to 4, wherein a heat transfer surface is installed within the vessels to keep a reaction temperature within the battery constant.

6. The battery according to Claim 5, wherein the heat transfer surface is either a pipe-shaped current collector or a plate-shaped current collector which is in contact with the active material particles.

7. The battery according to any one of Claims 1 to 6, wherein a discharge means for discharging the degraded active material particles from the vessel and a feed means for feeding the active material particles to the vessel are respectively connected to the vessels.

8. The battery according to Claim 7, wherein at least one of a recovery means for recovering the discharged active material particles and a makeup means for making up the active material particles is connected to the discharge means to allow recovered or newly replaced active material particles to be fed from the feed means to inside of the vessels.

9. The battery according to Claims 7 or 8, wherein a reaction means that converts the discharged active material particles into charged active material particles through a thermal chemical reaction or an electrochemical reaction is connected to the discharge means to allow the charged active material particles to be fed from the feed means to inside of the vessels.

10. The battery according any one of Claims 1 to 9, wherein active material particles on an anode side are hydrogen-occluding alloy particles and active material particles on a cathode side are nickel hydroxide particles.

11. The battery according to any one of Claims 1 to 10, wherein active material particles on an anode side are hydrogen-occluding alloy particles, a gas injected to the anode side is hydrogen, active material particles on a cathode side are nickel hydroxide particles, and a gas injected to the cathode side is oxygen or air.

12. A layered three-dimensional battery comprising plural sets of unit batteries, each of which is formed by filling an electrolytic solution in one of a pair of cells and putting active material particles adapted to discharge electrons into the electrolytic solution to form a fixed layer, and by filling an electrolytic solution in the other cell and putting active material particles adapted to absorb the electrons into the electrolytic solution to form a fixed layer, the pair of cells being connected to each other with a member interposed therebetween, the member being configured to permit passage of an ion and not to permit passage of the electron; electrically conductive current collecting members provided in contact with the active material particles and configured to serve as separating walls that define the cells, the unit batteries being connected in series to one another with each of the electrically conductive current collecting members interposed between the unit batteries; and current collectors provided on the cells at both ends of the unit batteries in contact with the active material particles so as to serve as a cathode electrode and an anode electrode, respectively.

13. A layered three-dimensional battery comprising plural sets of unit batteries, each of which is filled with electrolytic solutions within cells and includes a porous body that contains active material particles that form a fixed layer and discharge electrons in the electrolytic solution, and a porous body that contains active material particles that form a fixed layer and absorb the electrons in the electrolytic solution; electrically conductive current collecting members provided in contact with the active material particles and configured to serve as separating walls that define the cells, the plurality of unit batteries being connected in series to one another with each of the electrically conductive current collecting members interposed between the unit batteries; and current collectors provided on the cells at both ends of the unit batteries in contact with the active material particles so as to serve as a cathode electrode and an anode electrode, respectively.

14. The layered three-dimensional battery according to Claims 12 or 13, wherein the active material particles are obtained by mixing a high electron-conductive material with a low electron-conductive material, by mixing a high electron-conductive material with a low electron-conductive material and granulating a mixture of the materials, by applying a coating of a high electron-conductive material to a low-electron conductive material, by applying a coating of a high-electron conductive material to a low-electron conductive material, and mixing and granulating these materials, or by applying a coating of a high electron-conductive material to the granulated materials.

15. The battery according to Claim 12, 13 or 14, wherein an electrically conductive stud is provided integrally and protrusively from the current collecting member or the current collector toward an inside of the cell.

FIG. 1

FIG. 2

FIG. 3

FIG. 4

FIG. 5

26

12

14

hydrogen-occluding alloy and
electrolytic solution

nickel hydroxide and
electrolytic solution

48

50

20

22

10

FIG. 6

FIG. 7

FIG. 8

FIG. 9

FIG. 10

FIG. 11

FIG. 12

FIG. 13

(a)

(b)

FIG. 14

FIG. 15

101-1

FIG. 16

101-2

FIG. 17

101-3

FIG. 18

FIG. 19

FIG. 20

FIG. 21

FIG. 22

200

202 203 204

201 205

FIG. 23

200

202 203 204

201 205

FIG. 24

FIG. 25

FIG. 26

## INTERNATIONAL SEARCH REPORT

| | International application No. |
|---|---|
| | PCT/JP02/04191 |

**A. CLASSIFICATION OF SUBJECT MATTER**
Int.Cl⁷ H01M10/04, 10/30

According to International Patent Classification (IPC) or to both national classification and IPC

**B. FIELDS SEARCHED**

Minimum documentation searched (classification system followed by classification symbols)
Int.Cl⁷ H01M10/00-10/34, 4/14-4/84

Documentation searched other than minimum documentation to the extent that such documents are included in the fields searched
| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 3051401 B1 (Kawasaki Heavy Industries, Ltd.),<br>31 March, 2000 (31.03.00),<br>(Family: none) | 1,2,4-11<br>3,12-15 |
| Y | JP 2000-268814 A (Sanyo Electric Co., Ltd.),<br>29 September, 2000 (29.09.00),<br>(Family: none) | 3,14 |
| Y | JP 11-219701 A (Sanyo Electric Co., Ltd.),<br>10 August, 1999 (10.08.99),<br>(Family: none) | 3,14 |
| Y | US 5912090 A (Hitachi Maxell Kabushiki Kaisha),<br>15 June, 1999 (15.06.99),<br>& JP 9-298067 A<br>18 November, 1997 (18.11.97) | 12-15 |

☒ Further documents are listed in the continuation of Box C.　☐ See patent family annex.

| | |
|---|---|
| *　　Special categories of cited documents:<br>"A"　document defining the general state of the art which is not considered to be of particular relevance<br>"E"　earlier document but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 26 June, 2002 (26.06.02) | 09 July, 2002 (09.07.02) |

| Name and mailing address of the ISA/<br>　Japanese Patent Office | Authorized officer |
|---|---|
| Facsimile No. | Telephone No. |

Form PCT/ISA/210 (second sheet) (July 1998)

**EP 1 501 150 A1**

## INTERNATIONAL SEARCH REPORT

International application No.

PCT/JP02/04191

C (Continuation). DOCUMENTS CONSIDERED TO BE RELEVANT

| Category* | Citation of document, with indication, where appropriate, of the relevant passages | Relevant to claim No. |
|---|---|---|
| Y | WO 87/04011 A (Neste Oy), 02 July, 1987 (02.07.87), & EP 250517 A 07 January, 1988 (07.01.88), & US 4777101 A 11 October, 1988 (11.10.88), & JP 63-502064 A 11 August, 1988 (11.08.88) | 12-15 |
| Y | JP 1-31354 A (Sharp Corp.), 01 February, 1989 (01.02.89), (Family: none) | 12-15 |
| Y | JP 8-190914 A (Matsushita Electric Industrial Co., Ltd.), 23 July, 1996 (23.07.96), (Family: none) | 15 |
| Y | JP 10-334900 A (Matsushita Electric Industrial Co., Ltd.), 18 December, 1998 (18.12.98), (Family: none) | 15 |
| Y | JP 2001-143713 A (Matsushita Electric Industrial Co., Ltd.), 25 May, 2001 (25.05.01), (Family: none) | 15 |
| E,X | JP 2002-141101 A (Kawasaki Heavy Industries, Ltd.), 17 May, 2002 (17.05.02), (Family: none) | 1-4,10, 12-15 |
| A | JP 2002-50330 A (Kawasaki Heavy Industries, Ltd.), 15 February, 2002 (15.02.02), (Family: none) | 1-15 |

Form PCT/ISA/210 (continuation of second sheet) (July 1998)